# EUROPEAN PATENT APPLICATION

(11) **EP 2 302 844 A1**
(43) Date of publication of application: **30.03.2011**
(21) Application number: 09793855.9
(22) Date of filing: 09.07.2009
(51) Int. Cl.: H04L 12/56

(54) **A METHOD AND SYSTEM FOR JUDGING THE ACTIVATION OF IDLE-MODE SIGNALLING REDUCTION FUNCTION**

(30) Priority: 11.07.2008 CN 200810132324
(71) Applicant: ZTE Corporation, Shenzhen, Guangdong 518057 (CN)
(72) Inventor: HU, Ying, Shenzhen Guangdong 518057 (CN); ZHU, Jinguo, Shenzhen Guangdong 518057 (CN); ZONG, Zaifeng, Shenzhen Guangdong 518057 (CN)
(74) Representative: Vossius & Partner
(86) International application number: PCT/CN2009/072706
(87) International publication number: WO 2010/003380

(57) **Abstract**

A method and system for determining whether to activate the Idle mode Signalling Reduction (ISR) function. The method comprises: an ISR activation determining network element acquiring ISR capabilities of a terminal and network, and the information related to SGs and Gs during a process of activating ISR function after receiving a routing area update request or tracking area update request; the ISR activation determining network element restricting activation of ISR function under a special scenario, according to the acquired information related to SGs and Gs, where the terminal and the network satisfy ISR activation conditions; wherein, the ISR activation determining network element is one among a mobility management entity (MME) and a serving GPRS Support Node (SGSN). The method and system of the present invention solve the problem that the MSC/VLR may be unable to find the UE by paging due to the introduction of the ISR function.

## Description

### Technical Field

The present invention relates to the communication field, and in particular, to a method and system for determining whether to activate Idle mode Signalling Reduction (ISR) function.

### Background Art

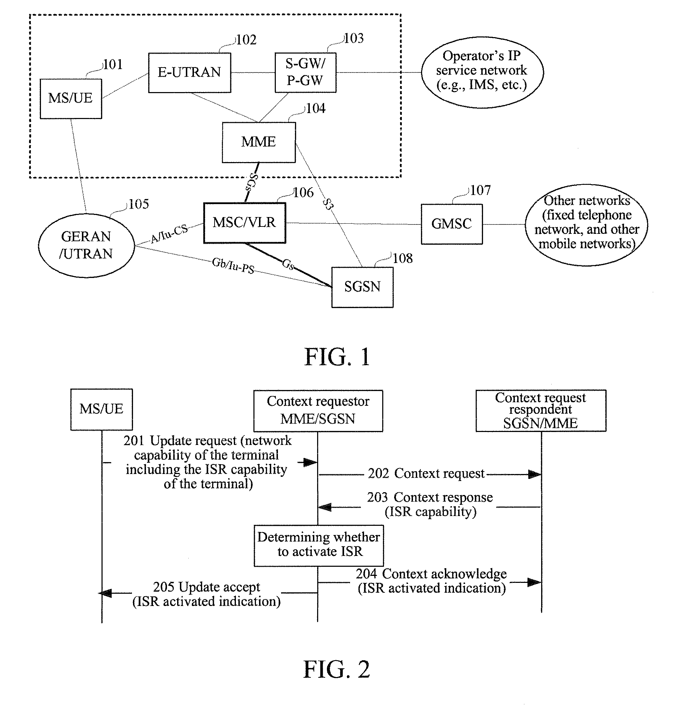

Currently, the standardization working group of the 3rd Generation Partnership Project (3GPP) is working on evolution of Packet Switched Core (PS Core) network and Universal mobile Telecommunication system terrestrial Radio Access Network (UTRAN), aiming at enabling the evolved PS Core to be able to provide higher transmission rate with shorter transmission delay and support mobility management among an Evolved UTRAN (E-UTRAN), a Global System for Mobile communications Enhanced Data Rate for GSM Evolution radio access network (GERAN), an UTRAN, a Wireless Local Area Network (WLAN) and other non-3GPP access networks. This evolved mobile communication system is called as Evolved Packet System (EPS). FIG. 1 illustrates the architecture of the above system, wherein only parts of the entities related with the present invention are shown. Each entity in FIG. 1 is described as follows:
Mobile Station (MS)/User Equipment (UE) 101: it is also called as a terminal, a terminal having capability of accessing two kinds of wireless networks is called as a dual-mode terminal and a terminal having capability of accessing multiple kinds of wireless networks is called as a multi-mode terminal. In the subsequent description, a UE is a dual-mode terminal or multi-mode terminal that can access a Global System for Mobile Communication (GSM)/Universal Mobile Telecommunication System (UMTS) and an EPS network, and MS/UE is uniformly indicated with UE.
E-UTRAN 102: it is an evolved wireless access network, and can provide higher uplink and downlink rate with shorter transmission delay and more reliable wireless transmission. The network element contained in E-UTRAN is an Evolved NodeB (eNodeB) for providing radio resources for access of the terminal.
Serving Gateway (S-GW) and Packet Data Network Gateway (PDN GW or P-GW) 103: S-GW is a user-plane entity responsible for user-plane data route processing. P-GW is responsible for gateway function of a UE accessing a Packet Data Network (PDN). P-GW and S-GW can be implemented in the same physical entity, as shown in FIG. 1, and can also be implemented in different physical entities respectively.
Mobility Management Entity (MME) 104: it is a control-plane entity and a server for temporarily storing subscriber data, responsible for managing and storing UE context (e.g., UE identifier/user identifier, mobility management status, UE security parameters, etc.), allocating a temporary identifier for the UE and responsible for authenticating the UE when the UE camps on a tracking area or the network managed by it.
IP (Internet Protocol) Multimedia Subsystem (IMS): it is an IP-based network architecture put forth by 3GPP, which constructs an open and flexible service environment, supports multimedia application, and provides rich multimedia services for the subscriber. IMS is an IP-based telecommunication network architecture irrelevant with the access technology and it can provide services for mobile cellular networks such as GSM and UMTS in addition to packet access networks such as EPS, General Packet Radio Service (GPRS), WLAN.
GERAN/UTRAN 105: it is the radio access network of legacy GSM/UMTS network.
Mobile Switching Center (MSC)/Visitor Location Register (VLR) 106: MSC/VLR may also be a new functional entity MSC Server since 3GPP R4 (Release 4) stage, and which is uniformly denoted with MSC/VLR hereinafter.
Gateway Mobile Switching Center (GMSC ) 107.
Serving GPRS Support Node (SGSN) 108: it is a control network element of GPRS network, whose main functions are recording location information of a UE and forwarding mobile packet data between a UE and a Gateway GPRS Supporting Node (GGSN).

When a UE camps on a GSM/UMTS network, basic voice service, short message servic ( SMS ) and supplementary services based on voice service of the subscriber are provided through Circuit Switched (CS) domain. The MSC/VLR and GMSC in FIG. 1 are CS domain network elements, and services such as voice call can be implemented between a subscriber and another subscriber in the local network or other networks (e.g., fixed telephone network and other mobile networks). IP services of a subscriber are provided through Packet Switched (PS) domain. The SGSN in FIG. 1 is a PS domain network element. A subscriber accesses a packet data network through a PS domain, and the operator's IP services networks in FIG. 1 are packet data networks.

In a GSM/UMTS network, a UE can implement CS update/attach and PS update/attach respectively and accesses a CS domain and a PS domain respectively. When a UE implements CS update/attach and PS update/attach respectively, the UE sends a Location Area Update (LAU) request message and a Routing Area Update (RAU) request message to GERAN/UTRAN (indicating GERAN and UTRAN) respectively. Upon receiving the LAU request message, the GERAN/UTRAN sends the LAU request message to the MSC/VLR via A/IU-CS interface, and then the MSC/VLR performs the process of update/attach of the CS domain upon receiving the LAU request message. After receiving a RAU request message, the GERAN/UTRAN sends the RAU request message to a SGSN via Gb/IU-PS interface, and then the SGSN performs the process of update/attach of the PS domain upon receiving the RAU request message. The way of performing updates in CS domain and PS domain respectively requires occupying radio resources and implementing signalling exchange respectively.

Gs interface between a MSC/VLR and a SGSN is incorporated in GPRS in order to save overhead of mobility management signalling and occupation of radio resources. The Gs interface is used to establish a Gs association between the MSC/VLR and SGSN (i.e., storing a VLR number in the SGSN and storing a SGSN number in the VLR), and the MSC/VLR sends paging for a CS service to the UE of the callee via the PS domain after the Gs association is established.

The Gs association is established by combined RAU/LAU. Combined RAU/LAU means that when a UE supporting simultaneous attach to a CS domain and a PS domain of a GSM/UMTS network performs RAU in the PS domain, the UE includes an identifier in the RAU message, and the SGSN sends a location update message to a MSC/VLR to trigger the location update procedure of the CS domain if determining that the network supports Gs interface when performing RAU, in which way, a CS domain LAU procedure is included in the PS domain RAU procedure, and a Gs association is established between the SGSN and the VLR after the combined RAU/LAU procedure is completed.

When a MSC/VLR receives a LAU request message via the A/IU-CS interface, the Gs association information will be deleted, and the MSC/VLR will store the location area information of the CS domain.

When a UE has attached to the CS domain and the PS domain of a GSM/UMTS network and a Gs association has been established, the MSC/VLR implements paging for CS service(s) via the SGSN. For example, if the subscriber of a UE is called by a subscriber in the local network or other networks as a callee, the MSC/VLR sends a CS paging request message to the SGSN via the Gs interface when implementing a mobile terminating call. The SGSN initiates the CS paging procedure upon receiving the CS paging request message and sends a paging message of CS service to the UE. After receiving the paging message of CS service, the UE accesses via CS domain of a GSM/UMTS network and sends a CS paging response message to the MSC/VLR via GERAN/UTRAN. The procedure of call establishment is started between the MSC/VLR and the USE after the MSC/VLR receives the CS paging response message. After call establishment is completed, the subscriber of the UE starts to have conversation with the subscriber initiating the call.

It should be noted that whether a UE supports combined RAU and LAU is optional. Based on the capability of simultaneously working in the CS domain and PS domain, the UE may be classified into three categories of terminals: Class A, Class B and Class C, where only Class A terminal and Class B terminal support combined RAU/LAU. Moreover, whether SGSN and MSC/VLR support the Gs interface is also optional, and some of MSC/VLR and SGSN products do not support the Gs interface, therefore, in some GSM/UMTS networks, the CS domain and PS domain may exist at the same time but no Gs interface is deployed in the network. In this case, the UE will perform update and/or attachment separately in the CS domain and PS domain. The CS service paging is performed via the A/Iu-CS interface.

In a GSM/UMTS network, when performing a mobile terminating call, if the MSC/VLR determines that there are ongoing CS services with the UE via the A/Iu-CS interface, then the MSC/VLR interacts with the UE directly via the existing signalling connection of the A/Iu-CS interface without paging the UE. Otherwise, the MSC/VLR executes the CS service paging via the Gs interface in the presence of Gs association; and when there is no Gs association existing between the MSC/VLR and the SGSN, the MSC/VLR executes the CS service paging via the A/Iu-CS interface..

When a UE camps on an EPS network, the basic voice service and supplementary services based on the voice service of the user are controlled by IMS, and the EPS system itself cannot provide or control voice call service and can only provide transmission for IP data. However, during EPS network deployment process, some operators, without deploying or unwilling to deploy IMS, may deploy EPS networks to provide high-rate IP data services for the user in the key or hot spots where the GSM/UMTS network is also available. In this scenario, voice call services are desired to be provided and they can only be provided by the CS domain of the fully covered GSM/UMTS network. When the UE camps on EPS, the UE cannot camp on the GSM/UMTS network, since the UE is single radio, so the UE is not able to receive CS service paging or initiate CS service via a GSM/UMTS network when it is camped on the E-UTRAN, in which case the subscriber cannot implement CS services such as voice call, SMS and so on. In order to enable CS services in such a network deployment scenario, 3GPP sets up a CS FallBack (CSFB) task to work out a solution.

The existing CSFB solution is as follows: SGs interface is introduced between MME and MSC/VLR, wherein the SGs is based on Gs interface extension. When a UE camps on an EPS network, the UE performs CSFB attach or combined Tracking Area Update (TAU) and LAU, and a SGs association is established between the MME and MSC/VLR (storing the MSC/VLR number or address information in the MME, and storing the MME number or address information in the MSC/VLR). Subsequently, when the UE moves about within the EPS network, the latest location information of the UE will be updated in the MME, and the MME information stored in the MSC/VLR will also be updated in time if the location area or the MME changes.

When the MSC/VLR receives a LAU request message from the A/IU-CS interface, the SGs association information will be deleted, and the MSC/VLR stores the location area information of the CS domain included in the LAU request message of this time.

When a CS service such as a mobile terminating call is implemented, if the UE of the callee accesses an EPS network, the MSC/VLR sends a CS paging message to the MME via SGs interface upon receiving a call, the MME sends the CS paging to the UE via an EUTRAN upon receiving the CS paging message, and after the UE is paged, CS FallBack procedure for call voice is started. The UE accesses a GSM/UMTS CS domain after the CS FallBack, and sends a CS paging acknowledgement message to the MSC/VLR, and then the MSC/VLR starts the procedure of call establishment and conversion upon receiving the acknowledgement message.

In a scenario that Idle mode Signalling Reduction (ISR) is not incorporated, in the case where there are CS services, the MSC/VLR can always find the UE by paging the UE based on the SGs, Gs or A/IU-CS information stored in the VLR.

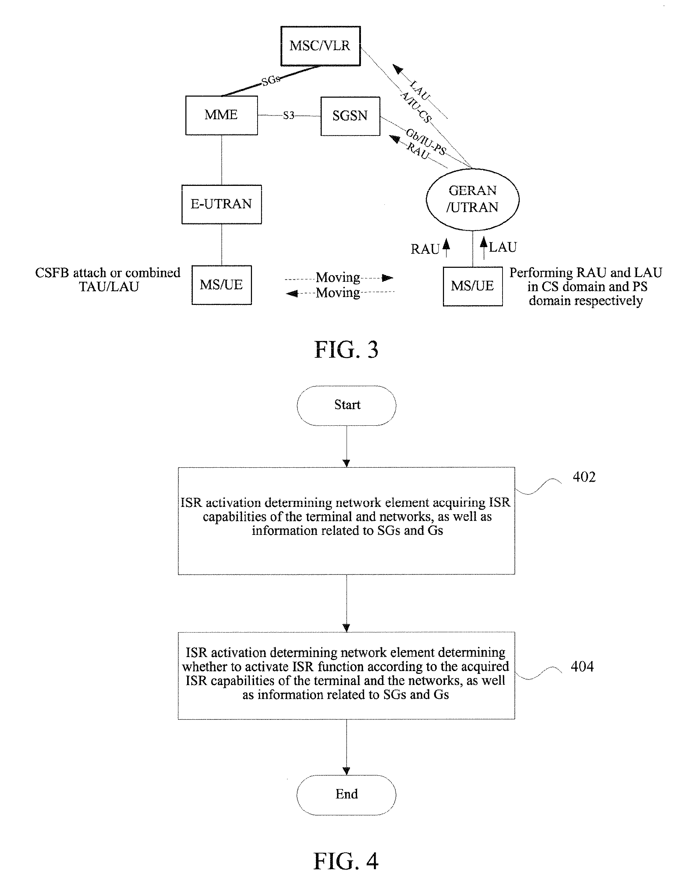

In a scenario that ISR is introduced and activated, the SGs interface is supported between MSC/VLR and MME for the purpose that the CSFB function is supported, while the Gs interface is not supported between SGSN and MSC/VLR, if a UE camps on EPS network, MSC/VLR will be unable to find the UE by paging during the CS services procedures in the scenario as shown in FIG. 3 according to the prior art. The ISR-related concepts and the ISR activation flow will be introduced with reference to FIG. 2 and FIG. 3, and the problem existing in CS paging will be described hereinafter.

ISR is a mechanism to limit signalling resulting from cell-reselection between Radio Access Technologies (RAT) performed by an UE when it is in idle mode. When the UE is in idle mode in an area overlapped with both GSM/UMTS network and EPS, it may frequently switch between GSM/UMTS access mode and EPS due to movement or changes of the intensity of radio signals or other reasons, which will cause frequent RAU (the procedure of the UE updating location in the PS domain of the GSM/UMTS network) and TAU (the procedure of the UE updating location in the EPS network) and will lead to a large amount of signalling interactions between the UE and the network. In order to reduce signalling load on the network brought about by the aforementioned signalling interaction process, one subject currently under study in 3GPP is ISR, the main idea of which is that when both the UE and the networks support ISR function, context information of the UE will be saved in both SGSN and MME, and registration information from these two networks is also saved in the UE, in this way, subsequently, when the UE switches among radio access networks, the UE will not perform the TAU or RAU procedure, in other words, subsequently, when the UE moves between the GSM/UMTS and EPS networks, if the current routing area of UE (UE location information in the PS domain of the GSM/UMTS network) has been registered and the current tracking area of the UE (UE location information in the EPS network) is in the lists of tracking area that the UE registered with the network, then the UE will not initiate the RAU and the TAU. Therefore, when there is no signalling connection between the UE and networks, the networks will not know whether the UE is camped on the EPS network or the GSM/UMTS network at the moment.

ISR activated refers to the case that both the UE and the network support ISR function, the UE keep valid registration information of the EPS and GSM/UMTS PS networks and an ISR activated flag is set in the UE context, meanwhile, both the MME and the SGSN store the UE's registration information, and the ISR activated flag is set in the UE's context in them respectively. ISR non-activated refers to the case that the UE will only have registration information of one access network, either EPS or GSM/UMTS PS network , either the MME or the SGSN will store the registration information of the UE, in this case.

The ISR activation flow in TAU or RAU procedure in the prior art is as shown in FIG. 2. FIG. 2 only includes ISR-related flow, and the processes of other signalling interaction in TAU or RAU procedure are omitted. In the subsequent drawings and flow description of the present invention, only the processes and parameters related to the present invention will be described, and other processes and parameters are omitted. The flow in FIG. 2 is as follows:
201: UE sending a TAU/RAU message to a MME/SGSN, wherein the network capability parameters of the terminal in the message includes ISR capability of the terminal;
202: during the TAU or RAU procedure, the MME/SGSN, as a context requestor, sending a context request to the SGSN/MME as a respondent of the context request;
203: the SGSN/MME, as a respondent of the context request, sending a context response to the MME/SGSN as a context requestor, wherein the response includes its ISR capability;
204: upon receiving the context response message, the context requestor determining whether ISR can be activated according to ISR activation determining conditions such as whether the terminal and the network support ISR function (the determining conditions also include whether the S-GW changes or not, if yes, then ISR is not activated), and then notifying the SGSN/MME as the respondent of the context request about whether to activate ISR by the ISR Activated indication in the context acknowledge message; the SGSN/MME as the respondent of the context request acquiring whether ISR is activated according to the ISR activation tag in the context acknowledge message upon receiving the context acknowledge message.
205: the MME/SGSN sending a update accept message to the UE, wherein the message includes ISR Activated indication; the UE acquiring whether ISR is activated according to the indication in the message upon receiving the update accept message.

Wherein, ISR Activated indication can have many embodiments. For example, including an ISR activation tag means ISR is activated, while not including ISR activation tag means ISR is not activated; or, the value of the ISR activation tag being 1 means ISR is activated, while the value being 0 means ISR is not activated.

FIG. 3 illustrates a scenario of the problem existing in CS service paging performed by a MSC/VLR. In the scenario as shown in FIG. 3, the MSC/VLR and MME support SGs interface therebetween, the SGSN and MSC/VLR do not support Gs interface therebetween, both the UE and network support ISR function, and ISR is activated.

In the first step shown in FIG. 3, the UE camps on EPS network, and performs CSFB attach or combined TAU/LAU procedure. CSFB attach is that the UE sends an attachment request message containing CSFB indication information to the EPS, the MME perform an EPS attach procedure upon receiving the attach request message, meanwhile, the MME sends a location update request message to the MSC/VLR to complete the update procedure of the UE in the CS domain. In this procedure, the MME generates a tracking area list based on the information such as the current Tracking Area Identity (TAI) of the subscriber and sends an attach accept message containing the tracking area list to the UE, then the UE stores the tracking area list upon receiving the attach accept message and set an identity that indicates the UE has performed an update in the EPS network. After the CSFB attach procedure has been completed, the UE has registered in the EPS network and the GSM/UMTS CS domain, the VLR stores the corresponding MME information while the MME stores the corresponding MSC/VLR information, and SGs association is established between the MSC/VLR and MME. The combined TAU/LAU procedure is similar to the above CSFB attach procedure, and thus it will not be described in detail here.

In the second step of FIG. 3, when the UE moves from the EPS network to the GSM/UMTS network, due to the radio signal quality or other reasons, the UE will perform the cell reselection and camp on the GSM/UMTS network, and since SGSN and MSC/VLR do not support Gs interface or the terminal does not support combined RAU and LAU, the UE can't perform combined update but performs RAU and LAU separately. As shown in FIG. 3, the SGSN receives a RAU message via Gb/ID-PS interface, and the MSC/VLR receives a LAU message via A/IU-CS interface. During the RAU procedure, since the SGSN, MME and UE all support ISR function, ISR is activated, the MME remain data including the UE context, the SGSN sends a RAU accept message including ISR activated information to the UE, the UE sets that it is registered in both EPS network and GSM/UMTS PS domain upon receiving the message, and after RAU is completed, ISR is activated, the UE has registered in both the GSM/UMTS PS domain and the EPS network. When the MSC/VLR receives the LAU message via the A/IU-CS interface, the SGs association will be deleted and the MSC/VLR only stores the location information included in the location update of this time according to the provisions of the prior art. Subsequently, when the UE moves from the GSM/UMTS network to the EPS network, as long as the current tracking area identity of the UE is in the list of tracking area identity that the UE registered with the network, the UE does not initiate a TAU procedure, then in the MSC/VLR there is no SGs association information. When the UE is within the scope of the tracking area list that has been registered in the first step shown in FIG. 3, if the subscriber of the UE is called by other user and the MSC/VLR needs to perform paging, as there is no SGs association in the MSC/VLR, the MSC/VLR will only page the UE in the GSM/UMTS network via A/IU-CS interface and will not initiate CS paging in the EPS network via SGs interface. However, since the UE can only camp on the EPS network at this moment and it cannot be paged in the GSM/UMTS CS domain, the MSC/VLR cannot find the UE by paging. In other words, in this case, the user of the UE is unable to receive the CS call. So far, there is no available solution for solving the above problem. Additionally, in the prior art, only SGs association or Gs association is retained valid between MSC/VLR and MME/SGSN in the case where both the terminal and the network support Gs interface. When SGs association is established between MSC/VLR and MME, the UE is in idle state and ISR is activated, the MME needs to forward the CS service paging message received from the MSC/VLR to the SGSN via S3 interface in order to notify the SGSN, to perform CS paging. Similarly, when Gs association is established between MSC/VLR and SGSN, the UE is in idle state and ISR is activated, the SGSN needs to forward the CS service paging message to the MME. When the CS service to be implemented is SMS, while the UE accesses EPS network, the SMS is transmitted via the SGs interface between the MSC/VLR and MME and the EPS network, instead of the UE falling back to the GSM/UMTS network for implement the SMS, so if the UE is in idle state, ISR is activated, and the Gs association between the MSC/VLR and SGSN is activated, the SGSN need to be able to acquire from the MSC/VLR that the current paging is for SMS and inform the MME of this information, then the MME will reestablish the SGs association with the MSC/VLR for transmitting SMS. In order to implement SMS and other CS services, the Gs interface has to be modified and the processing of MME will become more complex.

### Summary of the Invention

The technical problem to be solved by the present invention is providing a method and system for determining whether to activate Idle mode Signalling Reduction (ISR) function to overcome the drawbacks of the prior art, thereby restricting the activation of ISR function in particular scenarios to solve the problem that a MSC/VLR may be unable to found the UE by paging due to the introduction of the ISR function.

In order to solve the above technical problem, the present invention provides a method for determining whether to activate ISR function, comprising:
an ISR activation determining network element acquiring ISR capability of a terminal Mobile Station (MS)/User Equipment (UE) and networks, and information related to SGs and Gs during a process of activating ISR function;
the ISR activation determining network element restricting ISR function to be activated under special scenario, according to the acquired information related to SGs and Gs, where the UE and the network satisfy ISR activation conditions;
wherein, the ISR activation determining network element is mobility management entity (MME) or serving GPRS support node (SGSN).

In the method of the present invention, the information related to SGs and Gs is whether SGs/Gs interface is supported; or a SGs/Gs association is established; or whether forwarding of a circuit switched (CS) domain service paging message via S3 interface is supported; or a combination thereof.

The above method may further comprise: the ISR activation determining network element acquires the information related to SGs and Gs by way of static configuration. The above method may further comprise: the ISR activation determining network element restricting ISR activation if the ISR activation determining network element acquires based on the information related to SGs and Gs statically configured thereon that SGs interface and Gs interface are not supported simultaneously; The above method may further comprise: the ISR activation determining network element being a SGSN, and the SGSN restricting ISR activation in a combined update procedure if the SGSN acquires based on the information related to SGs and Gs configured thereon that MME is working in a mode supporting SGs interface; The above method may further comprise: the ISR activation determining network element restricting ISR activation in a combined update procedure if the ISR activation determining network element acquires that forwarding of a circuit switched (CS) domain service paging message between MME and SGSN is not supported.

In the method of the present invention, the ISR activation determining network element acquires the information related to SGs and Gs from a context request responding network element through a context response message; wherein, the information related to SGs and Gs is whether SGs/Gs interface is supported; the information related to SGs and Gs is implemented by adding a new information field, or by extending an existing field. The above method may further comprise: the ISR activation determining network element restricting ISR activation if the ISR activation determining network element acquires based on the information related to SGs and Gs acquired from a context response message that SGs interface and Gs interface are not supported simultaneously; The above method may further comprise: the ISR activation determining network element being a SGSN, and the SGSN restricting ISR activation in a combined update procedure if the SGSN acquires based on the information related to SGs and Gs acquired from a context response message that a MME is working in a mode supporting SGs interface.

In the method of the present invention, wherein the ISR activation determining network element acquires the information related to SGs and Gs from a context request responding network element through a context response message; wherein, the information related to SGs and Gs is whether SGs/Gs association is established; the information related to SGs and Gs is implemented by adding a new information field, or by extending an existing field. The above method may further comprise: the ISR activation determining network element restricting ISR activation if the ISR activation determining network element acquires based on the information related to SGs and Gs from the context response message that establishment of only one of SGs association and Gs association is supported; The above method may further comprise: the ISR activation determining network element being a SGSN, and the SGSN restricting ISR activation in a combined update procedure if the SGSN acquires based on the information related to SGs and Gs acquired from a context response message that MME has established a SGs association for the terminal.

In the method of the present invention, the ISR activation determining network element acquires the information related to SGs and Gs from information included in a TAU message or a RAU message by the UE, and the information is implemented by adding a new information field, or by extending an existing field. The above method may further comprise: the ISR activation determining network element restricting ISR activation if the ISR activation determining network element acquires based on the information related to SGs and Gs acquired from information included in a TAU request message or RAU request message by the UE that establishment of only one of SGs association and Gs association is supported; The above method may further comprise: the ISR activation determining network element being a SGSN, and the SGSN restricting ISR activation in a combined update procedure if the SGSN acquires based on the information related to SGs and Gs acquired from information included in a RAU request message by the UE that a MME has established a SGs association for the UE; The above method may further comprise: the information related to SGs/Gs being implemented in multiple ways, comprising: explicitly indicating whether the UE has established a SGs/Gs association; or notifying the network UE that a SGs association has been established by indicating that the UE has CS FallBack (CSFB) ability and including the information related to SGs/Gs only in a case where CSFB function is activated according to provisions of the network or the UE.

To solve the above problem, the present invention also provides a system for determining whether to activate Idle mode Signalling Reduction (ISR) function, comprising:
an ISR activation determining network element used to acquire ISR capability of a User Equipment (UE) and networks, and information related to SGs and Gs during a process of activating ISR function;
wherein the ISR activation determining network element is further used to restrict activation of ISR function under a special scenario according to the acquired information related to SGs and Gs, where the UE and the networks satisfy ISR activation conditions;
wherein the ISR activation determining network element is one of a mobility management entity (MME) and a serving GPRS support node (SGSN).

In the system of the present invention, the ISR activation determining network element is statically configured with the information related to SGs and Gs; the ISR activation determining network element restricts ISR activation if the ISR activation determining network element acquires based on the information related to SGs and Gs that SGs interface and Gs interface cannot be supported simultaneously.

The system may further comprise: the ISR activation determining network element is a SGSN, and the SGSN restricts ISO activation in a combined update procedure if the SGSN acquires based on the information related to SGs and Gs configured thereon that a MME is working in a mode supporting SGs interface;

The system may further comprise: the ISR activation determining network element is a MME, the MME is statically configured with the information related to SGs and Gs that forwarding of a CS paging message via S3 interface is not supported, and the MME restricts ISR activation in a combined update procedure if the MME acquires based on the information related to SGs and Gs that forwarding of a circuit switched (CS) domain service paging message between a MME and a SGSN is not supported.

The system of the present invention may further comprise a context request responding network element, wherein the ISR activation determining network element acquires the information related to SGs and Gs from the context request responding network element through a context response message; wherein the information related to SGs and Gs is whether SGs/Gs interface is supported; the information related to SGs and Gs is implemented by adding a new information field, or by extending an existing field.

The system may further comprise: the ISR activation determining network element restricts ISR activation if the ISR activation determining network element acquires based on the information related to SGs and Gs acquired from a context response message that SGs interface and Gs interface cannot be supported simultaneously.

The system may further comprise: the ISR activation determining network element is a SGSN, and the SGSN restricts ISR activation in a combined update procedure if the SGSN acquires based on the information related to SGs and Gs acquired from a context response message that a MME is working in a mode supporting SGs interface.

The system of the present invention may further comprise a context request responding network element, wherein the ISR activation determining network element acquires the information related to SGs and Gs from the context request responding network element through a context response message; wherein, the information related to SGs and Gs is whether SGs and Gs association has been established; the information related to SGs and Gs is implemented by adding a new information field, or by extending an existing field.

The system may further comprise: the ISR activation determining network element restricts ISR activation if the ISR activation determining network element acquires based on the information related to SGs and Gs acquired from a context response message that establishment of only one of SGs association and Gs association is supported;

The system may further comprise: the ISR activation determining network element is a SGSN, and the SGSN restricts ISR activation in a process of combined update if the SGSN acquires based on the information related to SGs and Gs acquired from a context response message that a MME has established a SGs association for the UE.

The system of the present invention may further comprise a UE and a context request responding network element, wherein the ISR activation determining network element acquires the information related to SGs and Gs based on information included in a TAU request message or a RAU request message by the UE; wherein the information related to SGs and Gs is information about whether the UE has established a SGs/Gs association in a wireless access system accessed the last time, and the information related to SGs and Gs is implemented by adding a new information field, or by extending an existing field.

The system may further comprises: the ISR activation determining network element restricts ISR activation if the ISR activation determining network element acquires based on the information related to SGs and Gs acquired from the information included in a TAU request message or a RAU request message by the UE that establishment of only one of SGs association and Gs association is supported;

The system may further comprises: the ISR activation determining network element is a SGSN, and the SGSN restricts ISR activation in a combined update procedure if the SGSN acquires based on the information related to SGs and Gs acquired from the information included in a RAU request message by the USE that a MME has established a SGs association for the USE.

The method and system of the present invention solves the problem that a MSC/VLR may be unable to reach a UE by paging due to introduction of ISR function, and ensures that a MSC/VLR can always correctly perform CS paging and find the UE by paging in various cases; the method and system of the present invention has minimum impact on the MSC/VLR, can be easily implemented and is beneficial to application of CSFB function and EPS network.

### Brief Description of Drawings

The drawings described here are intended to provide further understanding on the present invention and constitute a part of the present application, the illustrative examples of the present invention and the description thereof are used to explain the present invention and do not constitute improper limitations for the present invention. In the drawings:
FIG. 1 illustrates the applicable network architecture of the present invention;
FIG. 2 illustrates the flow of ISR activation according to the prior art;
FIG. 3 illustrates a scenario of the problem existing in CS service paging performed by MSC/VLR;
FIG. 4 illustrates the flow of the method for determining whether to activate ISR function according to the present invention;
FIG. 5 illustrates the flow of the method for determining whether to activate ISR according to Example Two of the present invention;
FIG. 6 illustrates the flow of applying Example Two of the present invention to ISR activation in the TAU procedure triggered when a UE accesses an EPS network;
FIG. 7 illustrates the flow of applying Example Two of the present invention to ISR activation in the RAU procedure triggered when a UE accesses a GSM/UMTS network;
FIG. 8 illustrates the flow of implementing the Example Two of the present invention in the scenario as shown in FIG. 3;
FIG. 9 illustrates the flow of the method for determining whether to activate ISR according to Example Three of the present invention;
FIG. 10 illustrates the flow of applying Example Three of the present invention to ISR activation in the TAU procedure triggered when a UE accesses an EPS network;
FIG. 11 illustrates the flow of applying Example Three of the present invention to ISR activation in the RAU procedure triggered when a UE accesses a GSM/UMTS network;
FIG. 12 illustrates the flow of implementing Example Three of the present invention in the scenario as shown in FIG. 3;
FIG. 13 illustrates the flow of the method for determining whether to activate ISR according to the Example Four of the present invention;
FIG. 14 illustrates the flow of implementing the Example Four of the present invention in the scenario as shown in FIG. 3;
FIG. 15 illustrates the structure of the system for determining whether to activate ISR according to the example of the present invention.

### Preferred Embodiments of the Invention

As can be seen from the aforementioned description, if ISR is not activated, the combined TAU/LAU procedure will always be initiated when a UE moves from a GSM/UMTS network to an EPS network, which will cause reestablishment of SGs association. When a UE is in an EPS network, a MSC/VLR can always find the UE by paging via SGs interface according to SGs association information, thereby ensuring that the MSC/VLR can always perform paging for a CS service normally. Therefore, it can be ensured that a MSC/VLR can always find the UE via paging by restricting activation of ISR function in particular scenarios, and it does not need to modify the MSC/VLR for that.

Based on the above idea, the main technical means of the present invention is achieving restriction of activation of ISR in particular scenarios by modifying the flow related to ISR activation in the TAU and RAU procedure and the criteria for determining whether to activate ISR in the prior art. In the process of ISR activation, an ISR activation determining network element (a MME or a SGSN) determines whether to activate ISR function not only according to the ISR activation determining conditions such as the ISR capabilities of the terminal and the networks and also according to the acquired information related to SGs and Gs.

The present invention will be described in detail below with reference to the drawings and the examples.

FIG. 4 illustrates the flow of the method for determining whether to activate ISR function according to the present invention. As shown in FIG. 4, the method comprises the following steps:
402: an ISR activation determining network element acquiring information such as ISR capabilities of the terminal and the networks, as well as information related to SGs and Gs;
404: the ISR activation determining network element determining whether ISR function can be activated according to the information such as ISR capabilities of the terminal and the network, as well as information related to SGs and Gs.

As for the specific implementation of the above method, there are many embodiments according to difference in the acquired information and the method, which will be introduced respectively.

### Example One:

Information related to SGs/Gs is statically configured in the ISR activation determining network element. The information related to SGs/Gs is configured in a MME and/or a SGSN by way of static configuration according to capability of the network (including whether the EPS network supports CSFB (i.e., supporting SGs interface) and ISR function, whether the SGSN supports Gs interface and ISR function). When the MME and/or the SGSN are used as the ISR activation determining network element, they determine whether to activate ISR function according to the information statically configured therein.

Specifically speaking, the following information needs to be configured in a MME: whether the connected SGSN is currently working in a mode supporting Gs interface; whether the MME is currently working in a mode supporting SGs interface and whether it supports ISR function. The following information needs to be configured in a SGSN: whether the connected MME is currently working in a mode supporting SGs interface; whether the SGSN is currently working in a mode supporting Gs interface and whether it supports ISR function. When specifically implemented, the above configuration information may be other configuration options that can achieve the same effect.

The method for determining whether to activate ISR using the above configuration information can be directly applied to the flow shown in FIG. 2, except that the ISR activation determining network element (MME/SGSN) needs to consider according to the above configuration information about whether the associated party of ISR (SGSN /MME) supports Gs/SGs interface and whether the ISR activation determining network element (MME/SGSN) is to establish a SGs/Gs association when determining whether to activate ISR upon receiving a context response message.

One of the embodiments is that when determining whether to activate ISR, the MME and SGSN determine the ISR activation determining conditions such as ISR capabilities of the terminal and the network, as well as whether Gs interface is supported in a case where SGs interface is supported. In a case where SGs is supported while Gs interface is not supported, ISR function is not to be activated even if the ISR activation determining conditions such as both the UE and the network support ISR function are satisfied.

The flow of implementing Example One of the present invention in the scenario as shown in FIG. 3 is as follows:
Step one: a UE firstly performs CSFB attach or combined TAU and LAU in an EPS network;
Step two: the UE includes the information that the UE supports ISR function in the network capability parameters of the UE in a RAU request message when the UE moves to a GSM/UMTS network and performs RAU; upon receiving the RAU request message, a SGSN sends a context request message to acquire context information from a MME. The MME includes the information of supporting ISR in a context response message; upon receiving the context response message, the SGSN checks the ISR activation determining conditions such as whether the terminal and the network support ISR function in the process of determining whether to activate ISR, and it does not activate ISR if it determines according to the configuration information that the MME is working in a mode supporting SGs interface while the SGSN itself does not support Gs interface and Gs association cannot be established; the SGSN does not include ISR Activated indication in the context acknowledge message sent to the MME. The SGSN does not include ISR Activated indication in a RAU accept message to the UE, and the UE knows that ISR is not activated; subsequently, the UE will initiate a combined TAU and LAU procedure when moving to an EPS network.

Example one of the present invention and various transformations thereof can also be applied to various scenarios of determining ISR activation where Gs interface is supported, in addition to the case where the terminal and network do not support Gs interface. For example:
Scenario 1, in order to avoid the impact on the Gs interface and the MME during implementation of services such as SMS and to ensure that these services can be implemented normally, the SGSN statically configures whether the connected MME is working in a mode supporting SGs interface, and when the SGSN receives a combined RAU/LAU message from the UE, the SGSN always restricts ISR activation if it determines that the MME as a context respondent is working in a mode supporting SGs interface during the process of determining ISR activation. The SGSN does not include ISR Activated indication in the context acknowledge message sent to the MME, and does not include ISR Activated indication to the UE in the RAU accept message, and the UE knows that ISR is not activated, therefore the UE will initiate a combined TAU/LAU procedure when moving to an EPS network subsequently to reestablish SGs association, thus ensuring that services including SMS can be implemented normally.

The above example can also be implemented specifically as follows: the SGSN does not statically configure whether the connected MME is working in a mode supporting SGs interface, instead, it is default setting in the SGSN by the by means such as artificial provisions or code implementation that all the MMEs connected with the SGSN support SGs interface, and the SGSN always restricts ISR activation when receiving a combined RAU/LAU message, the SGSN does not include ISR Activated indication in the context acknowledge message sent to the MME, and does not include ISR Activated indication to the UE in the combined RAU/LAU accept message, so the UE knows that ISR is not activated, and it will initiate a combined TAU and LAU procedure when moving to an EPS network subsequently to reestablish SGs association.
Scenario 2, some MMEs or SGSNs may not support forwarding of a CS service paging message via S3 interface during network deployment, so the CS service paging message cannot be transmitted between the associated MME and SGSN. For example, the SGSN supporting ISR function connected with a MME does not support forwarding of a CS service paging message via S3 interface, then in a case where SGs association is activated, ISR is activated, the UE is in idle mode and moves back from an EPS network to a GSM/UMTS network, and the routing area and the location area do not change, the UE will not initiate a update procedure, and the MME cannot forward the CS service paging message to the SGSN, therefore the MSC/VLR cannot send the CS service paging message to the UE when the UE accesses the GSM/UMTS network. In order that CS paging can be implemented normally in such case, the information related to SGs and Gs between the MME and the connected SGSN can be statically configured on the MME as not supporting S3 interface (S3 interface works as Gs interface for a SGSN in forwarding CS service paging information, therefore this configuration option can also be considered as an embodiment of the information related to SGs and Gs), in this way, the MME restricts ISR activation when performing combined TAU/LAU, the MME does not include ISR Activated indication in the combined TAU/LAU accept message sent to the UE, so the UE knows that ISR is not activated, and it will initiate a combined RAU/LAU procedure when moving to a GSM/UMTS network subsequently to reestablish Gs association, thereby solving the above problem. In specific implementation, when the MME does not support forwarding CS paging message via S3 interface, the MME is also enable to restrict ISR activation in all combined TAU/LAU procedures by means such as artificial provisions or code implementation in addition to the above embodiment of static configuration on the MME.

Example Two:

In this example, the ISR activation determining network element dynamically acquires information related to SGs and Gs during a process of activating ISR, and the information related to SGs and Gs is information about whether the context request respondent network element is working in a mode supporting Gs/SGs interface.

A MME/SGSN does not need to statically configure whether the SGSN/MME connected therewith is working in a mode supporting Gs/SGs interface, instead, the ISR activated counterpart SGSN/MME includes information about whether working in a mode supporting Gs/SGs interface in the context response message. When performing TAU/RAU, the MME/SGSN determines whether it needs to establish a SGs/Gs association, and whether the ISR activated counterpart SGSN/MME supports Gs/SGs interface. In a case where SGs interface is supported while Gs interface is not supported, ISR is not to be activated even if the ISR activation determining conditions such as both the UE and the network support ISR function are satisfied.

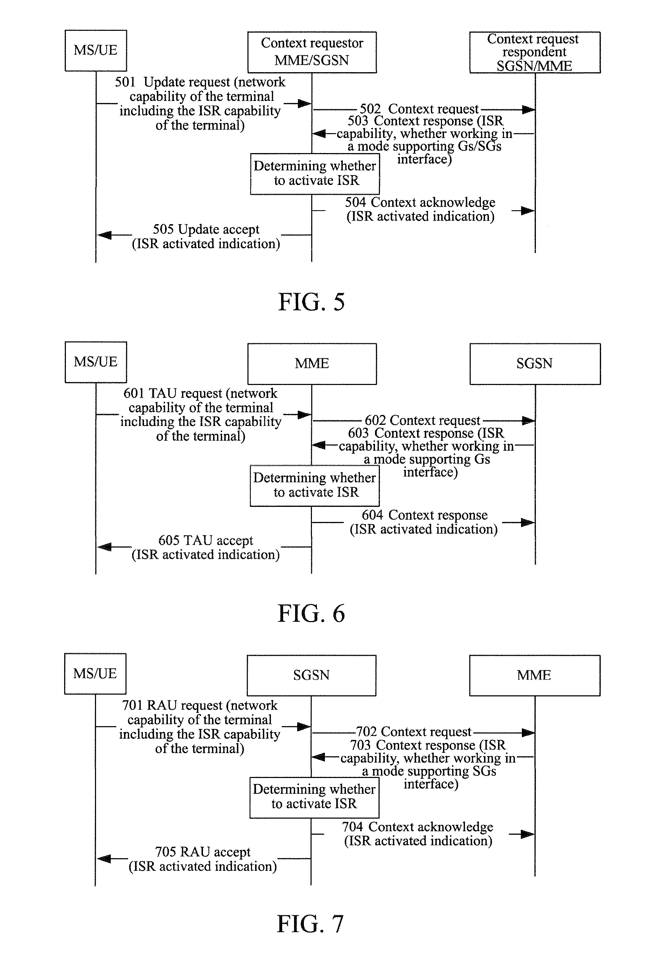

The flow of the method for determining whether to activate ISR according to Example Two of the present invention is as shown in FIG. 5. The flow is as follows:
501: a UE sending a TAU/RAU request message to a MME/SGSN, wherein the network capability parameters of the terminal in the message include ISR capability of the terminal;
502: in the TAU or RAU procedure, the MME/SGSN, as a context requestor, sending a context request to a SGSN/MME;
503: the SGSN/MME as a context request respondent sending a context response to the a context requestor MME/SGSN, wherein the response includes its own ISR capability and information about whether it is working in a mode supporting Gs/SGs interface; the information about whether it is working in a mode supporting Gs/SGs interface can be implemented by means such as adding a new information field or extending an existing field;
504: upon receiving the context response message, the context requestor determining whether it is necessary to activate ISR; and notifying the SGSN/MME about whether ISR currently is activated through ISR Activated indication in the context acknowledgement message;

When determining whether to activate ISR, it does not only need to check the ISR activation determining conditions such as the ISR capabilities of the terminal and the network, but also need to determining whether the related network element is working in a mode supporting SGs and Gs interfaces. If the ISR activation determining conditions such as both the UE and the network support ISR function are satisfied, and the MME is working in a mode supporting SGs interface and the SGSN supports Gs interface, then ISR is to be activated; otherwise, ISR is not to be activated.
505: the context requestor MME/SGSN sending an update accept message to the UE, and notifying the UE about whether ISR currently is activated through ISR Activated indication.

When the MME and SGSN are determining whether to activate ISR, they need to check the ISR activation determining conditions such as ISR capabilities of the terminal and the network, as well as whether SGs and Gs interfaces are supported. The SGSN includes information about whether it is working in a mode supporting Gs interface in the context response message to be sent to the MME; the MME includes information about whether it is working in a mode supporting SGs interface in the context response message to be sent to the SGSN.

FIG. 6 illustrates the flow of applying Example Two of the present invention to ISR activation in the TAU procedure triggered when a UE accesses an EPS network. The flow is as follows:
601: the UE sending a TAU request message to a MME, where the network capability parameters of the terminal in the message include ISR capability of the terminal;
602: in the TAU procedure, the MME as a context requestor sending a context request to a SGSN;
603: the SGSN as a context request respondent sending a context response to the MME as a context requestor, wherein the response includes its own ISR capability and information about whether it is working in a mode supporting Gs interface;
604: upon receiving the context response message, the MME determining whether to activate ISR; and notifying the SGSN about whether ISR currently is activated through ISR Activated indication in the context acknowledge message;

When the MME and SGSN are determining whether to activate ISR, they need to determine the ISR activation determining conditions such as ISR capabilities of the UE and the network, as well as whether they are working in a mode supporting SGs and Gs interfaces. If the ISR activation determining conditions such as both the UE and the network support ISR function are satisfied, and the MME is working in a mode supporting SGs interface while the SGSN supports Gs interface, then ISR is to be activated; otherwise, ISR is not to be activated.
605: the MME sending a TAU accept message to the UE, and notifying the UE about whether ISR currently is activated through ISR Activated indication.

FIG. 7 illustrates the flow of applying Example Two of the present invention to ISR activation in the RAU procedure triggered when a UE accesses a GSM/UMTS network. The flow is as follows:
701: the UE sending a RAU request message to a SGSN, where the network capability parameters of the terminal in the message include ISR capability of the terminal;
702: in the RAU procedure, the SGSN as a context requestor sending a context request to a MME;
703: the MME as a context request respondent sending a context response to the SGSN as a context requestor, wherein the response includes its own ISR capability and information about whether it is working in a mode supporting SGs interface;
704: upon receiving the context response message, the SGSN determining whether to activate ISR; and notifying the MME about whether ISR currently is activated through ISR Activated indication in the context acknowledge message;

When the MME and SGSN are determining whether to activate ISR, they need to determine the ISR activation determining conditions such as ISR capabilities of the UE and the network, as well as whether they are working in a mode supporting SGs and Gs interfaces. If the ISR activation determining conditions such as both the UE and the network support ISR function are satisfied, and the MME is working in a mode supporting SGs interface while the SGSN supports Gs interface, then ISR is to be activated; otherwise, ISR is not to be activated.
705: the SGSN sending a RAU accept message to the UE, and notifying the UE about whether ISR currently is activated through ISR Activated indication.

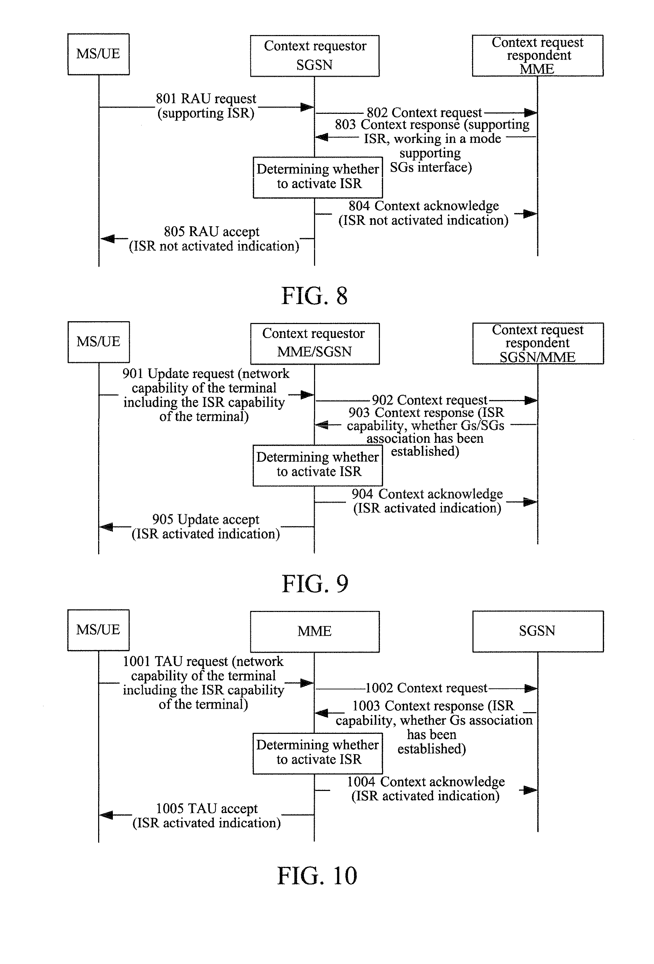

The flow of implementing the Example Two of the present invention in the scenario as shown in FIG. 3 is as shown in FIG. 8. The flow is as follows:
801: the UE firstly performing CSFB attach or combined TAU and LAU in an EPS network, and establishing a SGs association; then the UE moves to a GSM/UMTS network and performs RAU procedure, the UE including the information that it supports ISR function in the network capability parameters of the terminal in the RAU request message;
802: upon receiving the RAU request message, SGSN sending a context request message to acquire context information from a MME;
803: the MME including in a context response message its own ISR capability normally and the information about whether it is working in a mode supporting SGs interface;
804: upon receiving the context response message, when determining whether to activate ISR, the SGSN determining not to activate ISR if it acquires according to the context response message that the MME supports ISR function and is working in a mode supporting SGs interface while the SGSN itself does not support Gs interface; and notifying the MME ISR is not activated by sending a context acknowledge message without ISR activation tag;
805: the SGSN sending a RAU accept message that does not include ISR Activated indication to the UE, thereby the UE acquires that ISR is not activated.

Subsequently, the UE will initiate a combined TAU and LAU procedure when moving to an EPS network to reestablish SGs association.

Example two of the present invention and various transformations thereof can also be applied to various scenarios of determining ISR activation where Gs interface is supported, in addition to the case where the terminal and network do not support Gs interface. For example:

In order to avoid the impact on the Gs interface and the MME during implementation of services such as SMS and to ensure that these services can be implemented normally, the MME as a context request respondent sends a context response to the SGSN as the context requestor in the combined RAU/LAU procedure, wherein the response includes not only its own ISR capability but also the information about whether the MME is working in a mode supporting SGs interface; after the SGSN receives the context response message, the SGSN restricts ISR activation if it determines that the MME as a context respondent is working in a mode supporting SGs interface. The SGSN does not include ISR Activated indication in the context acknowledge message sent to the MME, and does not include ISR Activated indication in a RAU accept message to the UE, then the UE knows that ISR is not activated, therefore the UE will initiate a combined TAU and LAU procedure when moving to an EPS network subsequently to reestablish SGs association, thus ensuring that services including SMS can be implemented normally.

### Example Three

In this example, the ISR activation determining network element dynamically acquires information related to SGs/Gs during a process of activating ISR, and the information related to SGs/Gs is information about whether the context request responding network element has established SGs/Gs association for the UE.

The SGSN/MME includes the information about whether a Gs/SGs association has been established in the context response message to be sent to the MME/SGSN; when determining whether to activate ISR, the MME/SGSN determines whether both SGs and Gs associations can be established for the UE; in a case where establishment of SGs association is supported but establishment of Gs association is not supported, ISR is not to be activated even if ISR activation determining conditions such as both the UE and the network support ISR function are satisfied.

The flow of the method for determining whether to activate ISR according to Example Three of the present invention is as shown in FIG. 9. The flow is as follows:
901: the UE sending a TAU/RAU request message to a MME/SGSN, wherein the network capability parameters of the terminal in the message include ISR capability of the terminal;
902: in the TAU or RAU procedure, the MME/SGSN, as a context requestor, sending a context request to a SGSN/MME;
903: the SGSN/MME as a context request respondent sending a context response to the MME/SGSN as a context requestor, wherein the response message includes its own ISR capability and information about whether a Gs/SGs association has been established; the information about whether a Gs/SGs association has been established can be implemented by means such as adding a new information field or extending an existing field;
904: upon receiving the context response message, the context requestor determining whether it is necessary to activate ISR; and notifying the SGSN/MME about whether ISR currently is activated through ISR Activated indication in the context acknowledge message;

When determining whether to activate ISR, it does not only need to determine the ISR activation determining conditions such as the ISR capabilities of the terminal and the network, but also need to determine whether a Gs/SGs association has been established; if the ISR activation determining conditions such as both the UE and the network support ISR function are satisfied, and the MME supports establishment of SGs association while the SGSN supports establishment of Gs association, then ISR is to be activated; otherwise, ISR is not to be activated.
905: the context requestor MME/SGSN sending an update accept message to the UE, and notifying the UE about whether ISR currently is activated through ISR Activated indication.

When the MME and SGSN are determining whether to activate ISR, they need to determine the ISR activation determining conditions such as ISR capabilities of the terminal and the network, as well as whether SGs and Gs associations have been established. The SGSN includes information about whether a Gs association has been established in the context response message to be sent to the MME; the MME includes information about whether a SGs association has been established in the context response message to be sent to the SGSN.

FIG. 10 illustrates the flow of applying Example Three of the present invention to ISR activation in the TAU procedure triggered when a UE accesses an EPS network. The flow is as follows:
1001: the UE sending a TAU request message to a MME, where the network capability parameters of the terminal in the message include ISR capability of the terminal;
1002: in the TAU procedure, the MME as a context requestor sending a context request to a SGSN;
1003: the SGSN as a context request respondent sending a context response to the MME as a context requestor, wherein the response includes its own ISR capability and information about whether a Gs association has been established for the terminal;
1004: upon receiving the context response message, the MME determining whether to activate ISR; and notifying the SGSN about whether ISR currently is activated through ISR Activated indication in the context acknowledge message;

When the MME and SGSN are determining whether to activate ISR, they need to determine the ISR activation determining conditions such as ISR capabilities of the UE and the network, as well as whether establishment of SGs and Gs associations is supported. If the ISR activation determining conditions such as both the UE and the network support ISR function are satisfied, and the MME supports establishment of SGs association while the SGSN supports establishment of Gs association, then ISR is to be activated; otherwise, ISR is not to be activated.
1005: the MME sending a TAU accept message to the UE, and notifying the UE about whether ISR currently is activated through ISR Activated indication.

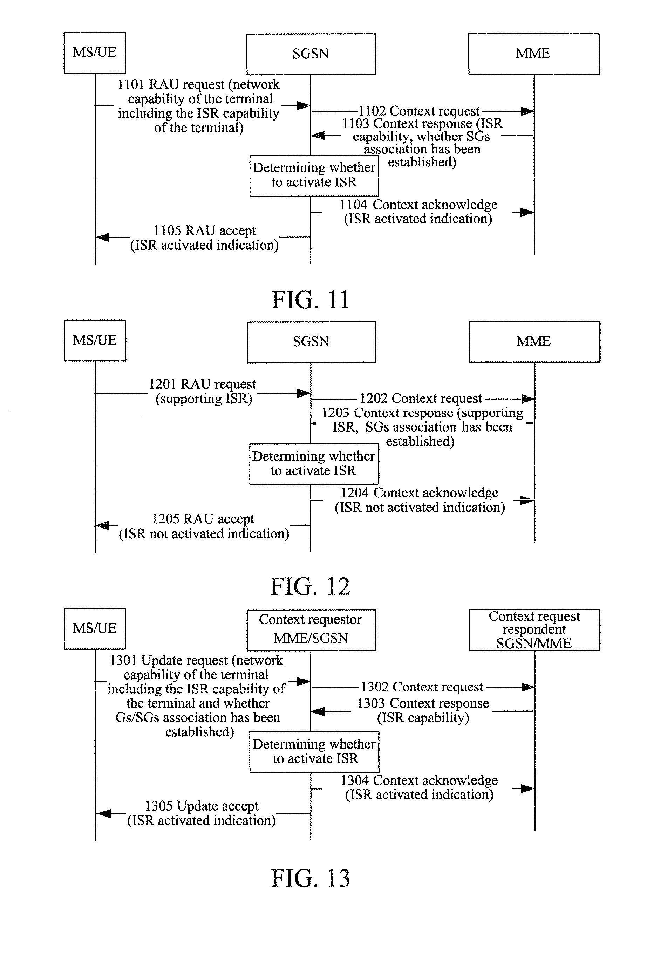

FIG. 11 illustrates the flow of applying Example Three of the present invention to ISR activation in the RAU procedure triggered when a UE accesses a GSM/UMTS network. The flow is as follows:
1101: the UE sending a RAU request message to a SGSN, where the network capability parameters of the terminal in the message include ISR capability of the terminal;
1102: in the RAU procedure, the SGSN as a context requestor sending a context request to a MME;
1103: the MME as a context request respondent sending a context response to the SGSN as a context requestor, wherein the response includes its own ISR capability and information about whether a SGs association has been established for the terminal; the information about whether a SGs association has been established can be implemented by means such as adding a new information field or extending an existing field;
1104: upon receiving the context response message, the SGSN determining whether to activate ISR; and notifying the MME about whether ISR currently is activated through ISR Activated indication in the context acknowledge message;

When the MME and SGSN are determining whether to activate ISR, they need to determine the ISR activation determining conditions such as ISR, capabilities of the UE and the network, as well as whether establishment of SGs and Gs associations is supported. If the ISR activation determining conditions such as both the UE and the network support ISR function are satisfied, and the MME supports establishment of SGs association while the SGSN supports establishment of Gs association, then ISR is to be activated; otherwise, ISR is not to be activated.
1105: the SGSN sending a RAU accept message to the UE, and notifying the UE about whether ISR currently is activated through ISR Activated indication.

The flow of implementing Example Three of the present invention in the scenario as shown in FIG. 3 is as shown in FIG. 12:
1201: the UE firstly performing CSFB attach or combined TAU and LAU in an EPS network, and establishing a SGs association; then the UE moves to a GSM/UMTS network and performs RAU procedure, the UE including the information that it supports ISR function in the network capability parameters of the terminal in the RAU request message;
1202: upon receiving the RAU request message, the SGSN sending a context request message to acquire context information from a MME;
1203: the MME normally including in a context response message its own ISR capability and the information about whether a SGs association has been established;
1204: upon receiving the context response message, when determining whether to activate ISR, it determining not to activate ISR if it determines according to the context response message that the MME supports ISR function and a SGs association has been established while the SGSN itself does not support established of a Gs association; and notifying the MME that ISR is not activated by sending a context acknowledge message without ISR Activated indication;
1205: the SGSN sending a RAU accept message that does not include ISR Activated indication to the UE, thereby the UE acquires that ISR is not activated.

Subsequently, the UE will initiate a combined TAU and LAU procedure when moving to an EPS network.

Example three of the present invention and various transformations thereof can also be applied to various scenarios of determining ISR activation where Gs interface is supported, in addition to the case where the terminal and network do not support Gs interface. For example:

In order to avoid the impact on the Gs interface and the MME during implementation of services such as SMS and to ensure that these services can be implemented normally, the MME as a context request respondent sends a context response to the SGSN as the context requestor in the combined RAU/LAU procedure, wherein the response includes not only its own ISR capability but also the information about whether a SGs association has been established for the UE; after the SGSN receives the context response message, the SGSN restricts ISR activation for the terminal if it determines that the terminal has established a SGs association. The SGSN does not include ISR Activated indication in the context acknowledge message sent to the MME, and does not include ISR Activated indication in the RAU accept message to the UE, then the UE acquires that ISR is not activated, therefore the UE will initiate a combined TAU and LAU procedure when moving to an EPS network subsequently to reestablish SGs association, thus ensuring that services including SMS can be implemented normally.

### Example Four:

In this example, a UE includes information related to SGs/Gs in a TAU or RAU request message sent to a ISR activation determining network element; wherein the information related to SGs/Gs is information about whether the UE has established a SGs/Gs association in the wireless access system accessed the last time, and the information can be achieved by adding a new information field, or by extending an existing field and can be implemented in many ways, including explicitly indicating whether the UE has established a SGs/Gs association; indicating that the UE has CS FallBack (CSFB) ability, and including the information only in the case where CSFB function is activated according to provisions of the network or UE, thereby notifying the network that the UE has established a SGs association.

During TAU or RAU procedure, the UE also sends the information about whether a Gs/SGs association has been established to the MME/SGSN by including the information in a TAU or RAU request message in addition to normally including the network capability of the terminal to the MME/SGSN; wherein, the UE can acquire whether a SGs association has been established according to whether CSFB attach or combined TAU/LAU has been completed, and acquires whether a Gs association has been established according to whether combined RAU/LAU has been successfully implemented. The UE can also acquire the information related to SGs/Gs by other means.

The SGSN/MME normally includes in a context response message its own ISR capability. When determining whether to activate ISR, the MME/SGSN determines whether the UE has established a SGs/Gs association in a wireless access system accessed the last time, and in a case where SGs association has been established but Gs association is not established, ISR is not to be activated even if the ISR activation determining conditions such as both the UE and the network support ISR function are satisfied. The flow is as follows:
1301: a UE sending a TAU/RAU request message to a MME/SGSN, wherein the network capability parameters of the terminal in the message include ISR capability of the terminal and the information about whether a SGs/Gs association has been established in a wireless access system accessed the last time;
1302: in the TAU or RAU procedure, the MME/SGSN, as a context requestor, sending a context request to a SGSN/MME;
1303: the SGSN/MME as a context request respondent sending a context response to the MME/SGSN as a context requestor, wherein the response includes its own ISR capability;
1304: upon receiving the context response message, the context requestor determining whether it is necessary to activate ISR; and notifying the SGSN/MME about whether ISR currently is activated through ISR Activated indication in the context acknowledge message;

When determining whether to activate ISR, it does not only need to determine the ISR activation determining conditions such as the ISR capabilities of the UE and the network, but also need to determine whether SGs and Gs associations are established at the same time according to the information related to SGs/Gs sent by the UE; if the ISR activation determining conditions such as both the UE and the network support ISR function are satisfied, a Gs association is established while a SGs association is also established, then ISR is to be activated; otherwise, ISR is not to be activated.
1305: the context requestor MME/SGSN sending an update accept message to the UE, and notifying the UE about whether ISR currently is activated through ISR Activated indication.

When the MME and SGSN are determining whether to activate ISR, they need to determine the ISR activation determining conditions such as ISR capabilities of the terminal and the network, as well as whether SGs and Gs associations are established at the same time. The UE includes information about whether a Gs association has been established in a TAU request message to be sent to the MME; the UE includes information about whether a SGs association has been established in a RAU request message to be sent to the SGSN.

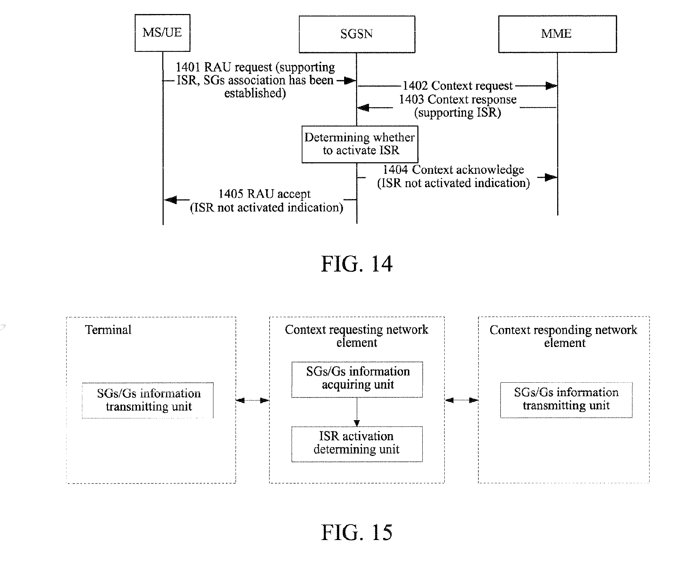

The flow of implementing the Example Four of the present invention in the scenario as shown in FIG. 3 is as shown in FIG. 14. The flow is as follows:
1401: the UE firstly performing CSFB attach or combined TAU and LAU in an EPS network; then the UE moves to a GSM/UMTS network and performs RAU procedure, the UE including the information that it supports ISR function in the network capability parameters of the terminal in the RAU request message and the information that a SGs association has been established according to successful implementation of CSFB attach or combined TAU/ LAU;
1402: upon receiving the RAU request message, the SGSN sending a context request message to acquire context information from a MME;
1403: the MME normally including in a context response message its own ISR capability;
1404: upon receiving the context response message, when determining whether to activate ISR, it determining not to activate ISR if it determines according to the RAU request message that the a SGs association has been established while the SGSN itself does not establish a Gs association; and notifying the MME not to activate ISR by sending a context acknowledge message without ISR Activated indication;
1405: the SGSN sending a RAU accept message that does not include ISR Activated indication to the UE, thereby the UE acquires that ISR is not activated.

Subsequently, the UE will initiate a combined TAU/LAU procedure when moving to an EPS network.

Example four of the present invention and various transformations thereof can also be applied to various scenarios of determining ISR activation where Gs interface is supported in addition to the case where the terminal and network do not support Gs interface. For example: In order to avoid the impact on the Gs interface and the MME during implementation of services such as SMS and to ensure that these services can be implemented normally, the SGSN determines whether to activate ISR function according to the information sent by the UE about whether a SGs association has been established in the combined RAU/LAU procedure, which can be implemented in many ways, including:
Embodiment 1, when performing combined RAU/LAU procedure, the UE includes the information that the UE supports ISR function in the network capability parameters of the terminal in a RAU request message; and includes the information that a SGs association has been established according to successful implementation of CSFB attach or combined TAU/LAU; when determining whether to activate ISR, the SGSN can acquire whether the UE has established SGs association according to the information sent by the UE, thereby determining and deciding to restrict ISR activation for the UE that has been established SGs association; the SGSN does not include ISR Activated indication in a context acknowledge message sent to the MME, and does not include ISR Activated indication in the RAU accept message to the UE, then the UE acquires that ISR is not activated, therefore the UE will initiate a combined TAU/LAU procedure when moving to an EPS network subsequently to reestablish SGs association.
Embodiment 2, when performing combined RAU/LAU procedure, the UE includes the information that the UE supports ISR function in the network capability parameters of the terminal in a RAU request message; and notifies the SGSN that SGs association has been established for the terminal by indicating that the UE supports CSFB function in case where CSFB function is activated according to the configuration provisions of the network or the UE; when determining whether to activate ISR, the SGSN can acquire whether the UE has established SGs association according to the information sent by the UE, thereby determining and deciding to restrict ISR activation for the UE that has been established SGs association, thereby ensuring that SGs association can be reestablished when the UE moves to an EPS network subsequently.

In all of the above examples, it can also be provided or defaulted that all UEs that can access EPS and GSM/UMTS networks have ISR capability, rather than the UE includes information of its own ISR capability in an update request message.

FIG. 15 illustrates the structure of the system for determining whether to activate ISR according to the example of the present invention. As shown in FIG. 15, the system comprises: a terminal, a context requesting network element, a context responding network element. Wherein:
a context requesting network element, i.e., an ISR activation determining network element , including: a SGs/Gs information acquiring unit and an ISR activation determining unit.

The context requesting network element is used to receive a RAU or TAU request sent from a terminal, and sends a context request to the context responding network element; upon receiving a context response returned by the context responding network element, the ISR activation determining network element determines whether to activate ISR function according to ISR activation determining conditions such as the ISR capabilities of the terminal and the network, as well as the information related to SGs and Gs acquired by the SGs/Gs information acquiring unit, and informing the context responding network element and the terminal of the determining result;

The above RAU or TAU request includes the ISR capability information of the terminal, and it may also not, instead of which, it can also be provided or defaulted that all UEs that can access EPS and GSM/UMTS networks have ISR capability;

The above context response includes the ISR capability information of the context responding network element.

Wherein, the above context requesting network element and context responding network element are one of SGSN and MME respectively;

The SGs/Gs information is: whether the MME is working in a mode supporting SGs interface or whether a SGs association information has been established; whether the SGSN is working in a mode supporting Gs interface or whether a Gs association information has been established; the SGs/Gs information can also be extended to indicate whether forwarding of a CS paging message via S3 interface is supported.

The context requesting network element determines not to activate ISR function when the following conditions are satisfied: the MME is working in a mode supporting SGs interface and the SGSN is working in a mode not supporting Gs interface; or the MME establishes SGs association but the SGSN does not establish Gs association; or it is determined during combined RAU/LAU that SGs association has been established for the terminal; or it is determined during combined RAU/LAU that the MME is working in a mode supporting SGs interface; or when the MME and the SGSN support SGs and Gs interfaces, forwarding of a CS paging message via S3 interface is not supported. The above information related to SGs and Gs can be statically configured in the SGs/Gs information acquiring unit of the context requesting network element.

Additionally, the context responding network element may further comprise a SGs/Gs information transmitting unit. Specifically speaking:
if the context requesting network element is a MME, and the context responding network element is a SGSN, then the SGSN comprises a Gs information transmitting unit for including in a context response the information about whether the SGSN is working in a mode supporting Gs interface or whether a Gs association has been established, and sending the information to the SGs/Gs information acquiring unit of the MME.
if the context requesting network element is a SGSN, and the context responding network element is a MME, then the MME comprises a SGs information transmitting unit for including in a context response the information about whether the MME is working in a mode supporting SGs interface or whether a SGs association has been established, and sending the information to the SGs/Gs information acquiring unit of the SGSN.

Additionally, the terminal may further comprise a SGs/Gs information transmitting unit. Specifically speaking:
if TAU is performed, then the SGs/Gs information transmitting unit in the terminal acquires whether the SGSN has established a Gs association according to whether combined RAU/LAU has been successfully implemented, and informs the MME of this by including it in a TAU request; the SGs/Gs information transmitting unit in the terminal can also determine whether a Gs association has been established according to whether the terminal and the network support and are configured with activated Gs interface, and indicates that Gs association has been established by including Gs capability in a TAU request only in case where Gs association has been established.
if RAU is performed, then the SGs/Gs information transmitting unit in the terminal acquires whether the MME has established a SGs association according to whether CSFB attach or combined TAU/LAU has been completed, and informs the SGSN of this by including it in the RAU request; the SGs/Gs information transmitting unit in the terminal can also determine whether a SGs association has been established according to whether the terminal has CSFB capability and the network or the UE are configured with for the UE activated CSFB function, and indicates that SGs association has been established by including CSFB capability in case where the UE activates CSFB function.

To sum up, method and system of the present invention solves the problem that a MSC/VLR may be unable to find a UE by paging due to introduction of ISR function, and ensures that a MSC/VLR can always correctly perform CS paging and page the UE in various cases; the method and system of the present invention has minimum impact on MSC/VLR, can be easily implemented and is beneficial to application of CSFB function and EPS network.

The above examples are only preferred ones of the present invention, and are not intended to limit the present invention. For a person skilled in the art, the present invention can have various modifications and changes. Any modification, equivalent substitution and improvement made within the spirit and principle of the present invention should fall within the protection scope of the present invention.

Of course, the present invention may have many other examples, and a person skilled in the art can make various corresponding modifications and transformations without departing from the spirit and essence of the present invention, which, however, should be covered by the protection scope of the attached claims of the present invention.

### Industrial Applicability

The method and system of the present invention solves the problem that a MSC/VLR may be unable to find a UE by paging in ISR function used scenarios, and ensures that a MSC/VLR can always correctly perform CS paging and find the UE by paging in various cases; the method and system of the present invention has minimum impact on MSC/VLR, can be easily implemented and is beneficial to application of CSFB function and EPS network.

## Claims

1. A method for determining whether to activate Idle mode Signalling Reduction (ISR) function, comprising:
an ISR activation determining network element acquiring ISR capability of a terminal Mobile Station (MS)/User Equipment (UE) and networks, and information related to SGs and Gs during a process of activating ISR function;
the ISR activation determining network element restricting activation of ISR function under a special scenario according to the acquired information related to SGs and Gs where the terminal MS/UE and the networks satisfy ISR activation conditions;
wherein the ISR activation determining network element is one among a mobility management entity (MME) and a serving GPRS support node (SGSN).

2. The method according to claim 1, wherein the information related to SGs and Gs is whether SGs/Gs interface is supported; or SGs/Gs association is established; or whether forwarding of a circuit switched (CS) domain service paging message via S3 interface is supported; or a combination thereof.

3. The method according to claim 1, wherein the ISR activation determining network element acquires the information related to SGs and Gs by way of static configuration.

4. The method according to claim 3, further comprising: the ISR activation determining network element restricting ISR activation if the ISR activation determining network element acquires based on the information related to SGs and Gs statically configured thereon that SGs interface and Gs interface are not supported simultaneously;
or, the method further comprising: the ISR activation determining network element being a SGSN, and the SGSN restricting ISR activation in a combined update procedure if the SGSN acquires based on the information related to SGs and Gs configured thereon that a MME is working in a mode supporting SGs interface;
or, the method further comprising: the ISR activation determining network element restricting ISR activation in a combined update procedure if the ISR activation determining network element acquires that forwarding of a circuit switched (CS) domain service paging message between a MME and a SGSN is not supported.

5. The method according to claim 1, wherein the ISR activation determining network element acquires the information related to SGs and Gs from a context request responding network element through a context response message; wherein, the information related to SGs and Gs is whether SGs and Gs interface is supported; the information related to SGs and Gs is implemented by adding a new information field, or by extending an existing field.

6. The method according to claim 5, further comprising:
the ISR activation determining network element restricting ISR activation if the ISR activation determining network element acquires based on the information related to SGs and Gs acquired from a context response message that SGs interface and Gs interface are not supported simultaneously;
or the method further comprising:
the ISR activation determining network element being a SGSN, and the SGSN restricting ISR activation in a combined update procedure if the SGSN acquires based on the information related to SGs and Gs acquired from a context response message that a MME is working in a mode supporting SGs interface.

7. The method according to claim 1, wherein the ISR activation determining network element acquires the information related to SGs and Gs from a context request responding network element through a context response message; wherein, the information related to SGs and Gs is whether SGs/Gs association is established; the information related to SGs and Gs is implemented by adding a new information field, or by extending an existing field.

8. The method according to claim 7, further comprising:
the ISR activation determining network element restricting ISR activation if the ISR activation determining network element acquires based on the information related to SGs and Gs from the context response message that establishment of only SGs association or Gs association is supported;
or the method further comprising:
the ISR activation determining network element being a SGSN, and the SGSN restricting ISR activation in a combined update procedure if the SGSN acquires based on the information related to SGs and Gs acquired from a context response message that a MME has established a SGs association for the terminal MS/UE.

9. The method according to claim 1, wherein the ISR activation determining network element acquires the information related to SGs and Gs from information included in a TAU message or a RAU message by the UE, and the information is implemented by adding a new information field, or by extending an existing field.

10. The method according to claim 9, further comprising:
the ISR activation determining network element restricting ISR activation if the ISR activation determining network element acquires based on the information related to SGs and Gs acquired from information included in a TAU request message or RAU request message by the terminal MS/UE that establishment of only SGs association or Gs association is supported;
or the method further comprising:
the ISR activation determining network element being a SGSN, and the SGSN restricting ISR activation in a combined update procedure if the SGSN acquires based on the information related to SGs and Gs acquired from information included in a RAU request message by the terminal MS/UE that a MME has established a SGs association for the terminal MS/UE;
the method further comprising:
the information related to SGs/Gs being implemented in a plurality of ways, comprising:
explicitly indicating whether the MS/UE has established SGs/Gs association; or
notifying the network that SGs association has been established for the terminal MS/UE by indicating that the terminal MS/UE has CS FallBack (CSFB) ability and including the information related to SGs/Gs only in a case where CSFB function is activated according to provisions of the network or the terminal MS/UE.

11. A system for determining whether to activate Idle mode Signalling Reduction (ISR) function, comprising:
an ISR activation determining network element used to acquire ISR capability of a terminal Mobile Station(MS)/User Equipment (UE) and a network, and information related to SGs and Gs during a process of activating ISR function;
wherein, the ISR activation determining network element is further used to restrict activation of ISR function under a special scenario where the terminal MS/UE and the network satisfy ISR activation conditions according to the acquired information related to SGs and Gs;
wherein the ISR activation determining network element is one among a mobility management entity (MME) and a serving GPRS support node (SGSN).

12. The system according to claim 11, wherein the ISR activation determining network element is statically configured with the information related to SGs and Gs; wherein:
the ISR activation determining network element restricts ISR activation if the ISR activation determining network element acquires based on the information related to SGs and Gs that SGs interface and Gs interface cannot be supported simultaneously;
or the ISR activation determining network element is a SGSN, and the SGSN restricts ISR activation in a combined update procedure if the SGSN acquires based on the information related to SGs and Gs configured thereon that a MME is working in a mode supporting SGs interface;
or the ISR activation determining network element is a MME, the MME is statically configured with the information related to SGs and Gs that forwarding of a CS paging message via S3 interface is not supported, and the MME restricts ISR activation in a combined update procedure if the MME acquires based on the information related to SGs and Gs that forwarding of a circuit switched (CS) domain service paging message between a MME and a SGSN is not supported.

13. The system according to claim 11, further comprising a context request responding network element, wherein the ISR activation determining network element acquires the information related to SGs and Gs from the context request responding network element through a context response message; wherein the information related to SGs and Gs is whether SGs and Gs interface is supported; the information related to SGs and Gs is implemented by adding a new information field, or by extending an existing field; wherein:
the ISR activation determining network element restricts ISR activation if the ISR activation determining network element acquires based on the information related to SGs and Gs acquired from a context response message that SGs interface and Gs interface cannot be supported simultaneously;
or the ISR activation determining network element is a SGSN, and the SGSN restricts ISR activation in a combined update procedure if the SGSN acquires based on the information related to SGs and Gs acquired from a context response message that a MME is working in a mode supporting SGs interface.

14. The system according to claim 11, further comprising a context request responding network element, wherein the ISR activation determining network element acquires the information related to SGs and Gs from the context request responding network element through a context response message; wherein, the information related to SGs and Gs is whether SGs/Gs association has been established; the information related to SGs and Gs is implemented by adding a new information field, or by extending an existing field; wherein:
the ISR activation determining network element restricts ISR activation if the ISR activation determining network element acquires based on the information related to SGs and Gs acquired from a context response message that establishment of only SGs association or Gs association is supported;
or the ISR activation determining network element is a SGSN, and the SGSN restricts ISR activation in a combined update procedure if the SGSN acquires based on the information related to SGs and Gs acquired from a context response message that a MME has established a SGs association for the terminal MS/UE.

15. The system according to claim 11, further comprising a terminal MS/UE and a context request responding network element, wherein the ISR activation determining network element acquires the information related to SGs and Gs based on information included in a TAU request message or a RAU request message by the terminal MS/UE; wherein the information, related to SGs and Gs is information about whether the UE has established a SGs/Gs association in a wireless access system accessed the last time, and the information related to SGs and Gs is implemented by adding a new information field, or by extending an existing field; wherein:
the ISR activation determining network element restricts ISR activation if the ISR activation determining network element acquires based on the information related to SGs and Gs acquired from the information included in a TAU request message or a RAU request message by the terminal MS/UE that establishment of only SGs association or Gs association is supported;
or the ISR activation determining network element is a SGSN, and the SGSN restricts ISR activation in a combined update procedure if the SGSN acquires based on the information related to SGs and Gs acquired from the information included in a RAU request message by the terminal MS/UE that a MME has established a SGs association for the terminal MS/UE.
